# EUROPEAN PATENT APPLICATION

(11) **EP 1 399 000 A2**
(43) Date of publication of application: **17.03.2004**
(21) Application number: 03250751.9
(22) Date of filing: 05.02.2003
(51) Int. Cl.: H05B 6/80

(54) **Microwave oven with toaster**

(30) Priority: 14.09.2002 KR 2002055991
(71) Applicant: SAMSUNG ELECTRONICS CO., LTD., Suwon-City, Kyungki-do (KR)
(72) Inventor: Han, Dae-Sung, Hwasung-City, Kyungki-Do (KR); Han, Yong-Woon, Kunpo-City, Kyungki-Do (KR); Jang, Seong-Deog, Suwon-City, Kyungki-Do (KR); Yeo, Joo-Yong, Paldal-Gu, Suwon-City, Kyungki-Do (KR); Kang, Han-Seong, Paldal-Gu, Suwon-City, Kyungki-Do (KR)
(74) Representative: Robinson, Ian Michael

(57) **Abstract**

A toaster integrated with a microwave oven to form a single structure. The microwave oven having the toaster, includes a cabinet (10) provided with a cooking cavity (11) and a microwave irradiating unit to irradiate microwaves into the cooking cavity (11). The microwave oven further includes a toaster body (40) mounted at an upper portion of the cabinet (10) and provided on a front thereof with at least one mouth (21). A grilling shelf (30) is retractably installed in the toaster body to be taken out of the toaster body (40) through the or each mouth (21), and is provided with a door (31) to close the mouth. A guide unit (52, 53) guides a movement of the grilling shelf (30). A drive unit (61, 62, 63, 64) moves the grilling shelf in the toaster body (40). A heater unit (71, 72) is installed in the toaster body (40) to heat bread laid on the grilling shelf (30).

## Description

The present invention relates in general to microwave ovens and, more particularly, to a microwave oven with a toaster, which is used to toast bread.

As is well known to those skilled in the art, a microwave oven is an appliance, which cooks food laid in its cooking cavity using microwaves irradiated from a magnetron into the cooking cavity. Typically, an electric heater cooks food by heating surfaces of the food, but the microwave oven cooks food using microwaves generated by oscillation of a magnetron. That is, when microwaves irradiated from the magnetron of the microwave oven cause molecules of moisture laden in food to vibrate, frictional heat is generated within the food and cooks it. Recently, there has been proposed a microwave oven having a heater in the cooking cavity. The microwave oven having the heater allows food to be cooked by radiant heat of the heater as well as microwaves from the magnetron, thus enhancing a cooking effect of food.

The conventional microwave oven has been widely used to cook a variety of foods due to its convenience. However, the conventional microwave oven has a problem in that it cooks food using microwaves. Therefore, performance of the conventional microwave is inferior to the performance of a typical electric heater when toasting bread.

The conventional microwave oven having the heater in the cooking cavity heats bread using the heat of the heater. However, since the conventional microwave oven is designed such that the heater is installed on an upper portion of the cooking cavity, an additional cooking shelf is inconveniently required to position bread adjacent to the heater. Furthermore, in order to uniformly toast both surfaces of the bread, the bread must be turned over during toasting.

An aim of the present invention is to provide a microwave oven adapted for toasting foods such as bread. A preferred aim is to provide such a microwave oven without increasing an overall manufacturing cost of the microwave oven. Another preferred aim is to provide a microwave oven capable of tasting a large quantity of bread, and ideally automatically toasting both sides of the bread. Another preferred aim is to provide a microwave oven where food to be toasted is easily put in and taken out from a cabinet of the microwave oven.

Additional aims and advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In one aspect of the present invention there is provided a microwave oven with a toaster, including a cabinet provided with a cooking cavity and microwave irradiating unit to irradiate microwaves into the cooking cavity. The microwave oven further includes a toaster body mounted on an upper portion of the cabinet and provided on a front thereof with a mouth, a grilling shelf retractably installed in the toaster body to be taken out of the toaster body through the mouth and provided with a door to close the mouth, a guide unit to guide a movement of the grilling shelf, a drive unit to move the grilling shelf, and a heater unit installed in the toaster body to heat bread laid on the grilling shelf.

Preferably, the microwave oven also has a toaster casing installed in the toaster body so that a mouth of the toaster casing corresponds to the mouth of the toaster body, thus closing a gap around the grilling shelf.

Preferably, the guide unit includes a guide groove longitudinally formed along an inner surface of each sidewall of the toaster casing, and a guide rail longitudinally provided along each sidewall of the grilling shelf to be projected outward from the sidewall of the grilling shelf and to move along an associated guide groove of the toaster casing.

Preferably, the drive unit includes a rack unit longitudinally provided on the grilling shelf, a pinion unit to engage with the rack unit and rotatably supported on the toaster casing by a rotating shaft, and a drive motor to rotate the rotating shaft of the pinion unit.

Preferably, the rack unit includes a first rack and a second rack. The first and second racks are longitudinally provided along lower portions of both sidewalls of the grilling shelf, and the pinion unit includes first and second pinions to engage with the first and second racks, respectively. The rotating shaft is rotatably supported at both ends thereof to the toaster casing and is assembled with the first and second pinions to rotate the pinions at the same time.

Preferably, the heater unit includes an upper heater installed on the upper portion of the toaster casing, and a lower heater installed on a lower portion of the toaster casing, such that the heater unit is positioned above and under the grilling shelf.

Preferably, the toaster casing is open at a bottom thereof to allow crumbs of bread to drop to a bottom of the toaster body, and a crumb collecting tray is installed in the toaster body at a position under the toaster casing to be removable from the toaster body.

Preferably, a plurality of grilling shelves are installed in the toaster body, and the guide unit, drive unit, and heater unit are installed to each of the grilling shelves.

Preferably, the grilling shelf includes a grilling part to seat bread thereon, two sidewalls longitudinally extending along both sides of the grilling shelf to support both sides of the grilling part, and a rear wall to connect rear ends of the two sidewalls to each other.

For a better understanding of the invention, and to show how embodiments of the same may be carried into effect, reference will now be made, by way of example, to the accompanying diagrammatic drawings in which:
Figure 1 is a perspective view showing a microwave oven with a toaster, according to an embodiment of the present invention;
Figure 2 is a perspective view of the toaster installed in the microwave oven of Figure 1; and
Figure 3 is a sectional view of the toaster installed in the microwave oven of Figure 1.

Reference will now be made in detail to the present preferred embodiments of the present invention, examples of which are illustrated in the accompanying drawings, wherein like reference numerals refer to like elements throughout.

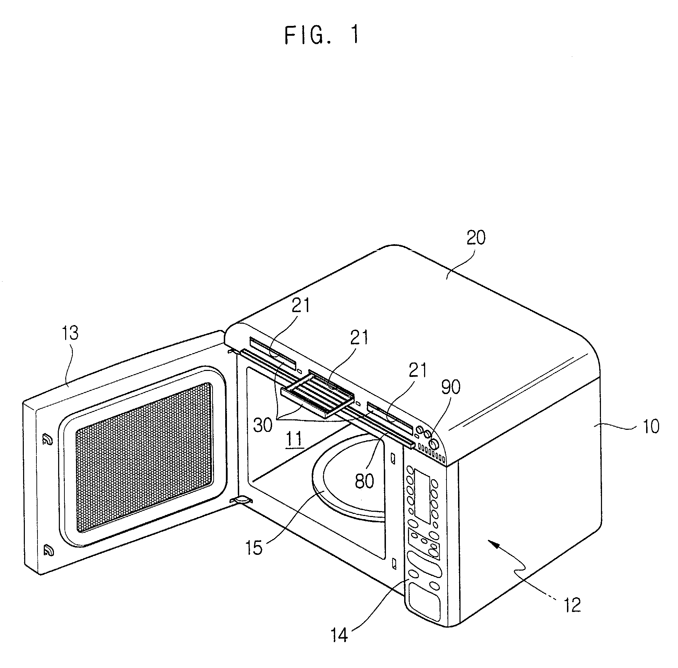

As shown in Figure 1, a microwave oven according to a preferred embodiment of the present invention includes a cabinet 10. The cabinet 10 is partitioned into a cooking cavity 11 and a machine room 12. The cooking cavity 11 is used to cook food. The machine room 12 contains several electrical devices. A door 13 is hinged to a front of the cooking cavity 11 to selectively open or close the cooking cavity 11. A control panel 14 is mounted to a front surface of the machine room 12, and is provided with several control buttons to control various functions of the microwave oven.

A cooking tray 15 is rotatably provided on a bottom of the cooking cavity 11 to lay food on the tray 15. A magnetron and a high-voltage transformer (not shown) are installed in the machine room 12. The magnetron irradiates microwaves into the cooking cavity 11. The high-voltage transformer applies high voltage to the magnetron. The above construction allows food laid on the cooking tray 15 provided in the cooking cavity 11 to be cooked by the microwaves irradiated from the magnetron.

A box-shaped toaster body 20 to toast bread is mounted on an upper portion of the cabinet 10, and is provided on a front thereof with a plurality of mouths 21. A plurality of grilling shelves 30 are retractably installed in the toaster body 20 to be taken out from the toaster body 20 through the corresponding mouths 21. Thus, the toaster body 20 may be integrated with the cabinet 10 to form a single structure. Alternatively, the toaster body 20 may be separately fabricated and then mounted on the upper portion of the cabinet 10.

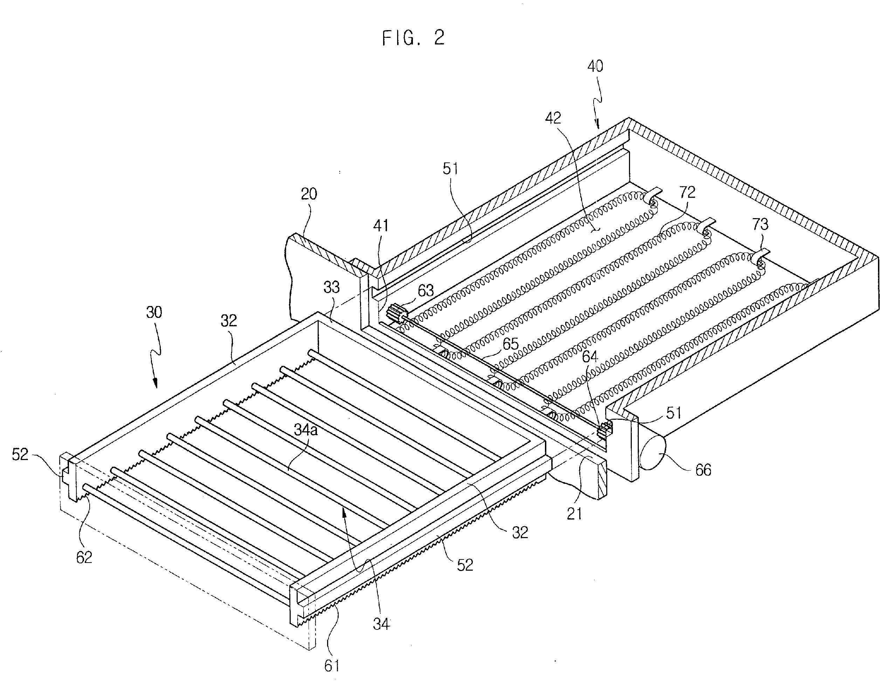

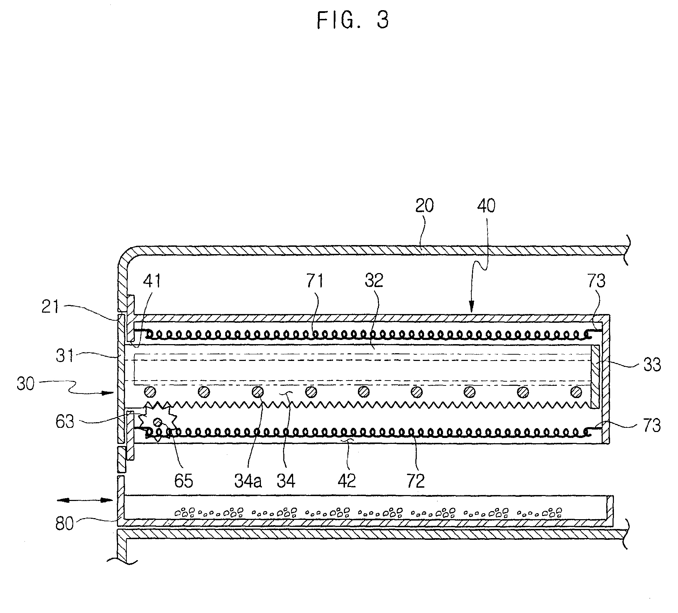

As shown in FIGS. 2 and 3, a toaster casing 40, a drive unit, and a heater unit is installed in the toaster body 20. The toaster casing 40 surrounds a portion of and closes a gap around each grilling shelf 30. A guide unit is provided in the toaster body 20 to guide a movement of each grilling shelf 30. The heater unit heats bread laid on each grilling shelf 30. The grilling shelves 30 are spaced apart from each other in a horizontal direction. The guide unit, drive unit and the heater unit are installed to each grilling shelf 30. Thus, only one of the grilling shelves 30 may be used or all of the grilling shelves 30 may be simultaneously used to toast bread.

The toaster casing 40 is open at a front thereof to form a mouth 41. Each grilling shelf 30 is put in and taken out from the toaster casing 40 through the mouth 41. A rectangular opening 42 is formed on a bottom of the toaster casing 40 to allow crumbs to be dropped from the grilling shelf 30 to a bottom of the toaster body 20. The toaster casing 40 is installed in the toaster body 20 so that the mouth 41 of the casing 40 is aligned with the mouth 21 of the toaster body 20.

Each grilling shelf 30 is provided with a door 31, two sidewalls 32, a rear wall 33, and a grilling part 34. The door 31 has a size corresponding to the mouth 21 of the toaster body 20 to selectively open or close the mouth 21 when each grilling shelf 30 is taken out from or put in the toaster casing 40. The two sidewalls 32 longitudinally extend along both sides of the grilling shelf 30. The rear wall 33 connects rear ends of the two sidewalls 32 to each other. The grilling part 34 is supported at side ends thereof to the sidewalls 32 to seat bread thereon, and includes a plurality of linear bars 34a which are spaced apart from each other.

The guide unit to guide a movement of each grilling shelf 30 includes two guide grooves 51 and two guide rails 52. The two guide grooves 51 are longitudinally formed along inner surfaces of both sidewalls of the toaster casing 40. The guide rails 52 are longitudinally provided along both sidewalls 32 of the grilling shelf 30 to be projected outward from the sidewalls 32 of the grilling shelf 30, and move along the guide grooves 51 of the toaster casing 40.

The drive unit includes first and second racks 61 and 62, and first and second pinions 63 and 64. The first and second racks 61 and 62 are longitudinally provided on lower portions of the sidewalls 32 of the grilling shelf 30. The first and second pinions 63 and 64 engage with the racks 62 and 61, respectively. The drive unit also has a rotating shaft 65 and a drive motor 66. The rotating shaft 65 is assembled with the first and second pinions 63 and 64 to rotate the pinions 63 and 64 at the same time. The drive motor 66 is connected to the rotating shaft 65 and rotates the rotating shaft 65. Thus, the rotating shaft 65 is rotatably supported, at both ends thereof, to sidewalls of the toaster casing 40. The drive motor 66 is connected to the rotating shaft 65 to be fixed to an outer surface of one of the sidewalls of the toaster casing 40. The above construction allows the grilling shelf 30 to be automatically taken out from or put in the toaster casing 40 when the two pinions 63 and 64 are rotated by an operation of the drive motor 66 which rotates in alternating directions.

As shown in Figure 3, the heater unit includes an upper heater 71 and a lower heater 72 to simultaneously heat upper and lower surfaces of bread laid on the grilling part 34 of the grilling shelf 30. The upper heater 71 is arranged above the grilling shelf 30, and the lower heater 72 is arranged under the grilling shelf 30. The upper and lower heaters 71 and 72 are held at upper and lower portions of the toaster casing 40, respectively, by a plurality of hook members 73.

As shown in FIGS. 1 and 3, the microwave oven of the present invention also has a crumb collecting tray 80. The crumb collecting tray 80 is installed in the toaster body 20 at a position under the toaster casing 40. The crumb collecting tray 80 is fabricated in a form of a drawer to be taken out from the toaster body 20, so that crumbs collected on the crumb collecting tray 80 through the opening 42 may be emptied as desired. The crumb collecting tray 80 longitudinally extends in a horizontal direction to have an area capable of effectively collecting crumbs dropped from all grilling shelves 30 at one place. Several control buttons 90 are mounted to predetermined positions of a front surface of the toaster body 20 to control an operation of the grilling shelves 30 and the heater unit.

The operation and use of the microwave oven according to the present invention is described below.

When a user desires to cook food through a microwaves-heating method, the food is primarily put in the cooking cavity 11. Next, the microwave oven is operated. At this time, the magnetron of the microwave oven irradiates microwaves into the cooking cavity 11 to cook the food.

Meanwhile, when the user desires to toast bread, the bread laid on the grilling shelf 30 which is placed in the upper portion of the cabinet 10 is toasted by the upper and lower heaters 71 and 72. The user first inputs a signal through the control buttons 90 such that the grilling shelf 30 is ejected from the toaster body 20. Next, the bread is laid on the grilling part 34 of the grilling shelf 30. Thereafter, the user inputs another signal through the control buttons 90 such that the grilling shelf 30 is retracted into the toaster body 20. The bread is heated by the upper and lower heaters 71 and 72 for a predetermined period of time.

The two pinions 63 and 64 are rotated in alternating directions by the operation of the drive motor 66 such that the grilling shelf 30 is ejected or retracted into the toaster body 20. Thus, the bread to be toasted is easily laid on the grilling shelf 30, while the toasted bread is easily taken out from the grilling shelf 30. Since the upper and lower surfaces of the bread laid on the grilling shelf 30 are simultaneously heated by the upper and lower heaters 71 and 72, both surfaces of the bread are uniformly toasted.

The microwave oven of the present invention may be operated with only one of the plurality of grilling shelves 30 selected and used to toast bread. In addition, the microwave oven of the present invention may be operated with all of the grilling shelves 30 used. Thus, the microwave oven of the present invention is convenient to use, and reduces the consumption of energy because only the heater units of the selected grilling shelves 30 are operated.

The crumbs produced during a cooking process drop to the bottom of the toaster casing 40, through the opening 42 which is formed on the bottom of the toaster casing 40. The crumbs are deposited on the crumb collecting tray 80. Thus, the user may periodically take the crumb collecting tray 80 out from the toaster body 20, and remove the crumbs from the crumb collecting tray 80.

As apparent from the above description, the present invention provides a microwave oven with a toaster, which is designed such that a toaster body is integrated with a cabinet of the oven to form a single structure, thus achieving a desired function of toasting bread without considerably increasing the manufacturing cost of the microwave oven.

Furthermore, the microwave oven of the present invention allows a large quantity of bread to be simultaneously toasted using a plurality of grilling shelves. The microwave oven of the present invention is designed such that the grilling shelves are ejected from or retracted into the toaster body, thus making it easy to lay bread on the grilling shelves or take the bread out from the grilling shelves.

Although a few preferred embodiments of the present invention have been shown and described, it would be appreciated by those skilled in the art that changes may be made in these embodiments without departing from the scope of the invention, as defined in the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A microwave oven with a toaster, having a cabinet (10) provided with a cooking cavity (11) and microwave irradiating unit to irradiate microwaves into the cooking cavity (11), said microwave oven comprising:
a toaster body (20) mounted on a portion of the cabinet (10) and provided on a front thereof with a mouth (21);
a grilling shelf (30) retractably installed in the toaster body (20) to be taken out of the toaster body (20) through the mouth (21), and provided with a door (31) to close the mouth (21);
a guide unit (51, 52) to guide a movement of the grilling shelf (30) ;
a drive unit (61, 62, 63, 64) to move the grilling shelf (30); and
a heater unit (71, 72) installed in the toaster body (20) to heat food laid on the grilling shelf (30).

2. The microwave oven as set forth in claim 1, further comprising:
a toaster casing (40) installed in said toaster body (20) so that a mouth (41) of the toaster casing (40) corresponds to the mouth (21) of the toaster body (20), thus closing a gap around the grilling shelf (30).

3. The microwave oven as set forth in claim 2, wherein said guide unit (51, 52) comprises:
a guide groove (51) longitudinally formed along an inner surface of each sidewall of the toaster casing (40); and
a guide rail (52) longitudinally provided along each sidewall of the grilling shelf (30) to be projected outward from the sidewall of the grilling shelf (30), and to move along an associated guide groove (51) of the toaster casing (40).

4. The microwave oven as set forth in claim 2 or 3, wherein said drive unit comprises:
a rack unit (61, 62) longitudinally provided on the grilling shelf (30);
a pinion unit (63, 64) to engage with the rack unit and rotatably supported on the toaster casing (40) by a rotating shaft (65); and
a drive motor (66) to rotate the rotating shaft (65) of the pinion unit.

5. The microwave oven as set forth in claim 4, wherein: said rack unit comprises a first rack (61) and a second rack (62), said first and second racks longitudinally provided along lower portions of both sidewalls of the grilling shelf (30);
said pinion unit comprises first and second pinions (63, 64) to engage with the first and second racks, respectively; and
a rotating shaft (65) is rotatably supported at both ends thereof to the toaster casing (40) and is assembled with the first and second pinions (63, 64) to rotate the pinions at the same time.

6. The microwave oven as set forth in claim 5, wherein the drive motor (66) is connected to the rotating shaft (65) to be fixed to an outer surface of a sidewall of the toaster casing (40), allowing the grilling shelf (30) to be automatically taken out from and put into the toaster casing (40) when the first and second pinions (63, 64) are rotated by the drive motor (66).

7. The microwave oven as set forth in claim 5 or 6, wherein the first and second pinions (63, 64) are rotated in alternating directions by the drive motor (66) so that the grilling shelf (30) is ejected from and retracted into the toaster body (20).

8. The microwave oven as set forth in any of claims 2 to 7, wherein said heater unit comprises:
an upper heater (71) installed on an upper portion of the toaster casing (40); and
a lower heater (72) installed on a lower portion of the toaster casing (40), so that the heater unit is positioned above and under the grilling shelf (30).

9. The microwave oven as set forth in claim 8, further comprising:
a plurality of hook members (73) to hold the upper and lower heaters (72) at the upper and lower portions of the toaster casing (40).

10. The microwave oven as set forth in any of claims 2 to 9, further comprising:
a rectangular opening (42) provided on a bottom of the toaster casing (40) to allow crumbs to be dropped from the grilling shelf (30) to a bottom of the toaster body (20); and
a crumb' collecting tray (80) installed in the toaster body (20) at a position under the toaster casing (40) to be taken out from the toaster body (20), so that the crumbs collected on the crumb collecting tray (80) through the rectangular opening (42) are emptied.

11. The microwave oven as set forth in any preceding claim, further comprising:
a plurality of grilling shelves (30) installed in the toaster body (20), and a plurality of said guide units, drive units, and heater units are respectively installed to each of the grilling shelves (30).

12. The microwave oven as set forth in any preceding claim, further comprising:
a crumb collecting tray (80) of a single structure installed under the grilling shelf (30) to be taken out from the toaster body (20).

13. The microwave oven as set forth in any preceding claim, wherein said grilling shelf (30) comprises:
a door (31) corresponding to the mouth of the toaster body (20), to selectively open or close the mouth when the grilling shelf (30) is taken out from or put into the toaster casing (40);
a grilling part (34) having a plurality of linear bars spaced apart from each other, to seat food thereon;
two sidewalls longitudinally extending along both sides of the grilling shelf (30) to support both sides of the grilling part (34); and
a rear wall (33) to connect rear ends of the two sidewalls to each other.

14. The microwave oven as set forth in any preceding claim, wherein said heater unit comprises:
an upper heater (71) installed above the grilling shelf (30); and
a lower heater (72) installed under the grilling shelf (30).

15. The microwave oven as set forth in any preceding claim, wherein said toaster body (20) is integrated with the cabinet (10) to form a single structure.

16. A microwave oven with a toaster, having a cabinet (10) provided with a cooking cavity (11), a microwave irradiating unit to irradiate microwaves into the cooking cavity (11), and a control unit to control various functions of the microwave oven, said microwave oven comprising:
a toaster body (20) mounted on the cabinet (10) and provided on a front thereof with a plurality of mouths (21);
a plurality of grilling shelves (30) retractably installed in the toaster body (20) to be taken out of the toaster body (20) through the respective mouths, and provided with a door (31) to close the mouths;
a guide unit (51, 52) to guide a movement of the respective grilling shelf (30);
a drive unit (61, 62, 63, 64) to move the respective grilling shelf (30) ; and
a heater unit (71, 72) installed in the toaster body (20) to heat food laid on the respective grilling shelf (30).

17. The microwave oven as set forth in claim 16, wherein the control unit selectively operates the plurality of grilling shelves (30) .

18. A microwave oven with a toaster, having a cabinet (10) provided with a cooking cavity (11), a microwave irradiating unit to irradiate microwaves into the cooking cavity (11), and a control unit to control various functions of the microwave oven, said microwave oven comprising:
a toaster body (20) mounted on the cabinet (10) and provided on a front thereof with a plurality of openings; and
a plurality of grilling shelves (30) retractably installed in the toaster body (20) to be taken out of the toaster body (20) through the respective openings, and provided with a door (31) to close the openings, wherein,
said microwave oven and toaster body (20) are integrally formed.

19. A microwave oven with a toaster having a cabinet (10) provided with a cooking cavity (11), a microwave irradiating unit to irradiate microwaves into the cooking cavity (11), and a control unit to control various functions of the microwave oven, said microwave oven comprising:
a plurality of toasters mounted on the cabinet (10), each provided on a front thereof with an opening, and each comprising:
a grilling shelf (30) retractably installed therein to be ejected from the opening;
a guide unit (51, 52) to guide a movement of the grilling shelf (30) ;
a drive unit (61, 62, 63, 64) to move the grilling shelf (30); and
a heater unit (71, 72) installed to heat food laid on the grilling shelf (30).
